# FASCICULE DE BREVET EUROPEEN

(11) **EP 0 466 993 B1**
(45) Date de publication et mention de la délivrance du brevet: **04.01.1995**
(21) Numéro de dépôt: 90402075.7
(22) Date de dépôt: 18.07.1990
(51) Int. Cl.: F16C 41/04, F16C 25/08, B64G 1/44, B64G 1/66

(54) **Procédé et dispositif de relâchement d'une précharge appliquée initialement sur un mécanisme tel qu'un roulement embarqué sur un véhicule spatial**
Verfahren und Vorrichtung zum Lösen einer Vorspannung, die anfangs an einen Mechanismus angelegt ist, beispielsweise ein Lager das sich an Bord eines Raumfahrzeuges befindet
Method and device for releasing the pre-load initially applied to a mechanism such as an on-board bearing in a spacecraft

(43) Date de publication de la demande: 22.01.1992
(73) Titulaire: AEROSPATIALE Société Nationale Industrielle, 75781 Paris Cédex 16 (FR)
(72) Inventeur: Schoeffter, Jean-Pierre, F-06370 Mouans Sartoux (FR)
(74) Mandataire: Dubois-Chabert, Guy

(56) Documents cités:
- EP-A- 0 303 169
- FR-A- 2 192 643
- FR-A- 2 630 172
- FR-A- 2 648 200
- PATENT ABSTRACTS OF JAPAN, vol. 6, no. 36 (M-115)[914], 5 mars 1982;& JP-A-56 150 614 (NIPPON SEIKO) 21-11-1981
- PATENT ABSTRACTS OF JAPAN, vol. 7, no. 31 (M-192)[1176], 8 février 1983;& JP-A-57 184 726 (MITSUBISHI DENKI) 13-11-1982
- PATENT ABSTRACTS OF JAPAN, vol. 12, no. 206 (M-708)[3053], 14 juin 1988;& JP-A-63 9720 (NIPPON SEIKO) 16-01-1988
- PATENT ABSTRACTS OF JAPAN, vol. 1, no. 164, 23 décembre 1977, page 6161 M 77;& JP-A-52 110 354 (FUJI DENKI SEIZOU) 16-09-1977

## Description

L'invention concerne un procédé et un dispositif conçus pour relâcher une précharge appliquée initialement entre des pièces en mouvement d'un mécanisme tel qu'un roulement embarqué sur un véhicule spatial, lorsque ce véhicule est en mode opérationnel.

Les véhicules spatiaux tels que les satellites artificiels et les stations orbitales comportent des équipements tels que des panneaux solaires, des antennes, etc., qui comprennent des mécanismes permettant des mouvements relatifs entre les pièces qui les constituent, lorsque le véhicule est sur orbite. Ces mécanismes sont le plus souvent des roulements à billes, mais ils peuvent aussi comprendre des systèmes vis-écrou et des roulements de types différents.

Lors du lancement des véhicules spatiaux, ces différents mécanismes sont soumis à des sollicitations mécaniques élevées. Dans le cas des roulements à billes, les efforts sont transmis d'une bague à l'autre en passant par les billes. La présence ou la création de jeux au cours de cette phase conduirait donc à des chocs entre les billes et les bagues, entraînant des dégradations de surface qui, à terme, conduiraient à un mauvais fonctionnement puis à la détérioration du roulement.

Afin d'éviter toute apparition de jeu dans ces mécanismes lors du lancement, on leur applique donc habituellement une précharge.

Cependant, cette précharge est limitée à une valeur minimale, pour éviter de trop pénaliser le mécanisme dans les conditions opérationnelles. En effet, dans ces conditions, seule une précharge environ 10 fois inférieure à celle qui doit être appliquée lors du lancement est réellement nécessaire. Ainsi, lorsque le véhicule est en mode opérationnel, toute augmentation de la précharge se traduit notamment par un accroîssement du couple résistant du mécanisme, des irrégularités de fonctionnement liées à la fluctuation de ce couple et une limitation de la durée de vie.

Dans la pratique, la précharge appliquée sur les mécanismes est donc le résultat d'un compromis entre les exigences contradictoires qui président au lancement, puis au vol du véhicule spatial.

Ainsi, dans le cas particulier d'un roulement à billes, ce roulement est dimensionné en déterminant les forces statiques représentatives des charges vibrationnelles qu'il subit lors du lancement, puis on applique à ce roulement une précharge minimale qui est approximativement égale au tiers de ces forces statiques. Cette précharge doit donc être appliquée avec une bonne précision (environ 20 %), ce qui nécessite d'utiliser des jauges de contrainte sensibles et conduit à une procédure délicate, longue et coûteuse. Cette méthode exige en outre, des interfaces qui ne sont pas toujours compatibles.

Etant donné que l'on applique sur les mécanismes une précharge limitée, les risques de création de jeux lors du lancement ne sont pas totalement supprimés en présence d'efforts importants.

Par conséquent, on a également l'habitude d'interposer entre les pièces en mouvement des mécanismes, ou entre des éléments liés à ces pièces, un organe rigide de gerbage par lequel sont transmises une partie des charges engendrées lors du lancement. Lorsque le véhicule spatial arrive en conditions opérationnelles, cet organe rigide doit être rompu au moyen d'une commande pyrotechnique.

Indépendamment du domaine spatial, le document Patent Abstracts, vol. 6, n° 36 (M-115) [914], 5 mars 1982 & JP-56 150614 décrit un palier dans lequel une précontrainte axiale est appliquée au moyen d'un ressort de précontrainte et d'un ressort en un matériau à mémoire de forme placés bout à bout. A grande vitesse, l'échauffement du palier réduit la longueur du ressort en un matériau à mémoire de forme et, par conséquent la précontrainte axiale.

La présente invention a pour objet un procédé et un dispositif permettant, de façon particulièrement simple et non contraignante, de relâcher la précharge appliquée lors du lancement sur les mécanismes tels que des roulements à billes embarqués sur des véhicules spatiaux, après l'arrivée de ces véhicules en mode opérationnel, ce qui permet, d'une part, de rendre cette précharge illimitée et, par conséquent, d'éviter tout risque de dégradation des mécanismes lors de la phase de lancement et, d'autre part, de limiter la précharge en mode opérationnel au strict nécessaire, sans que le recours à un organe rigide de gerbage associé à une commande pyrotechnique soit impératif.

Selon l'invention, ce résultat est obtenu au moyen d'un dispositif conforme à la revendication 1.

Il est rappelé qu'un matériau à mémoire de forme est un matériau qui présente deux phases cristallines stables, respectivement austénitique et martensitique, selon que sa température est supérieure ou inférieure à la température de transformation structurale caractéristique de ce matériau. Lorsque le matériau en phase martensitique est soumis à une contrainte mécanique, il est déformé plastiquement et conserve cette déformation tant que la température reste inférieure à sa température de transformation structurale. Dès que la température devient supérieure à ce seuil, la structure redevient austénitique et le matériau reprend sa forme initiale.

Le changement de forme du matériau engendré par le franchissement de la température de changement de phase peut notamment consister en un allongement. L'organe en matériau à mémoire de forme agit alors comme un vérin qui est calé avant le lancement à une dimension calculée, pour laquelle une précharge élevée est appliquée sur le mécanisme par les moyens de précharge. Le chauffage du matériau, qui peut être assuré soit par un moyen de chauffage tel qu'une résistance électrique disposée à proximité de l'organe en matériau à mémoire de forme, soit au moyen de l'énergie solaire, allonge cet organe, ce qui a pour effet de relâcher la précharge appliquée sur le mécanisme.

L'invention a aussi pour objet un procédé de relâchement d'une précharge appliquée initialement entre des pièces en mouvement d'un mécanisme embarqué sur un véhicule spatial lorsque ce dernier est en mode opérationnel, caractérisé par le fait qu'il consiste à commander un changement de forme d'un organe en un matériau à mémoire de forme associé à ce mécanisme, de façon à obtenir un relâchement de la précharge appliquée entre les pièces, en faisant franchir audit organe une température de changement de phase du matériau à mémoire de forme.

On décrira maintenant, à titre d'exemple non limitatif, un mode de réalisation de l'invention, en se référant aux dessins annexés dans lesquels :
- la figure 1 est une vue en coupe longitudinale d'une charnière ou articulation embarquée sur un véhicule spatial, comportant deux roulements à billes sur lesquels est appliquée une précharge axiale, ce montage étant muni d'un dispositif selon l'invention pour relâcher cette précharge, ce dispositif étant représenté dans son état initial inactif ; et
- la figure 2 est une vue comparable à la figure 1, dans laquelle le dispositif de relâchement de la précharge est représenté dans son état actionné.

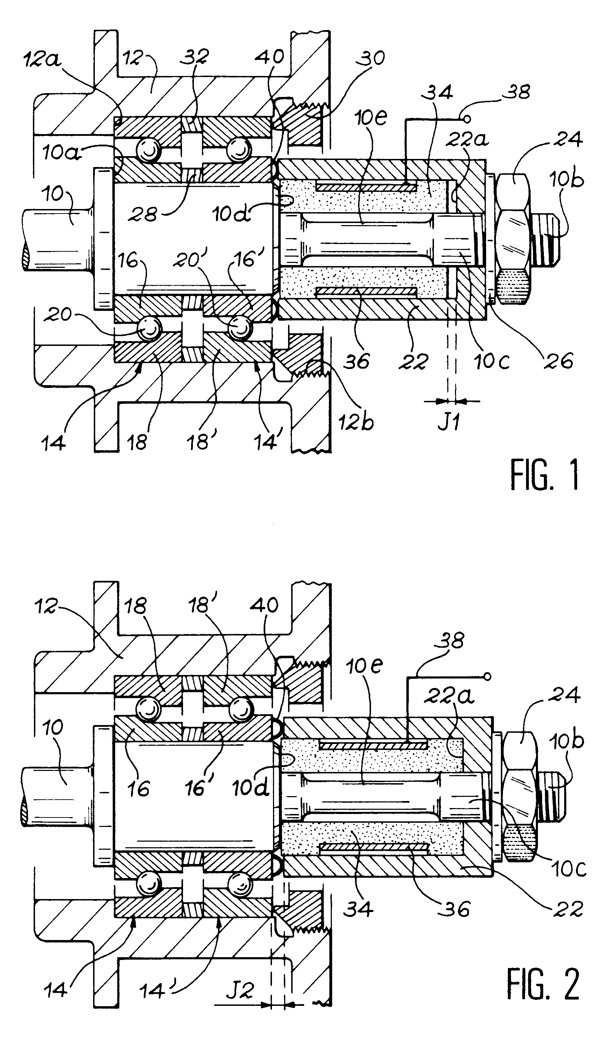

L'articulation représentée sur la figure 1 est, par exemple une articulation d'un panneau solaire de satellite ou de station orbitale. Cette articulation comprend un arbre 10, supposé fixe dans le mode de réalisation représenté, et un manchon extérieur 12 monté tournant sur l'arbre 10 par l'intermédiaire de deux roulements à billes 14 et 14'.

Chacun des roulements 14 et 14' comprend respectivement une bague intérieure 16, 16', une bague extérieure 18, 18' et des billes 20, 20' roulant entre les bagues.

Les bagues intérieures 16 et 16' sont montées sur l'arbre 10 entre un épaulement 10a formé sur ce dernier et une entretoise tubulaire 22 disposée coaxialement autour de l'arbre 10. L'extrémité opposée de cette entretoise 22 est placée en vis-à-vis d'un écrou 24 vissé sur une extrémité filetée 10b de l'arbre 10, une rondelle d'appui 26 étant interposée entre l'écrou 24 et l'entretoise 22.

L'écrou 24 ainsi que l'extrémité filetée 10b de l'arbre 10 constituent ainsi des moyens de précharge grâce auxquels une précharge axiale peut être appliquée sur les bagues intérieures fixes 16 et 16' des roulements 14 et 14'. Une entretoise tubulaire 28 interposée entre les bagues 16 et 16' assure le transfert de cette précharge d'une bague à l'autre.

Les bagues extérieures tournantes 18 et 18' sont montées dans le manchon extérieur 12 entre un épaulement 12a et un écrou 30 vissé dans une extrémité alésée 12b du manchon. Une entretoise tubulaire 32 est également interposée entre les bagues extérieures 18 et 18'.

La structure qui vient d'être décrite est classique, à l'exception de l'entretoise tubulaire 22, la rondelle d'appui 26 étant habituellement en contact direct avec la bague intérieure 16' du roulement 14'.

Conformément à l'invention, on adjoint à cette structure une pièce supplémentaire, constituée par une deuxième entretoise tubulaire 34 qui est réalisée en un matériau à mémoire de forme et placée coaxialement à l'intérieur de l'entretoise 22 autour d'une partie 10c, de diamètre réduit, de l'arbre 10, sur laquelle est formée l'extrémité filetée 10b. De façon plus précise, l'entretoise tubulaire 34 est placée entre un épaulement 10d de l'arbre 10 situé dans un plan voisin de la face d'extrémité de la bague intérieure 16' sur laquelle est en appui l'entretoise 22, et un épaulement 22a formé dans cette dernière à proximité de la rondelle 26.

Dans la position illustrée sur la figure 1, qui correspond à la position de montage au sol de l'articulation, et qui reste inchangée pendant toute la durée du lancement du véhicule spatial sur lequel est embarquée cette articulation, il existe un jeu axial J1 entre l'entretoise 34 et les épaulements 10d et 22a. Par conséquent, la précharge obtenue par le serrage de l'écrou 24, qui est transmise par l'entretoise 22 aux bagues intérieures 16' et 16 des roulements 14' et 14, n'est pas supportée par l'entretoise 34 en matériau à mémoire de forme.

Pour la réalisation de l'entretoise tubulaire 34, on choisit un matériau à mémoire de forme convenable, en fonction des conditions d'utilisation, en tenant compte en particulier de la température de changement de phase de l'alliage. De façon nullement limitative, on citera parmi les matériaux à mémoire de forme utilisables dans l'invention les alliages à base de fer (Fe-C, Fe-Cr, Fe-Ni...), des alliages cuivreux ou de métaux nobles (Cu-Zn, Cu-Sn, Cu-Al, Cu-Zn-Al, Cu-Zn-Al-Ni, Cu-Al-Ni, Ag-Cd, Au-Cd,...), des alliages à base de titane et/ou de Nickel (Ni-Ti, Ni-Ti-Fe, Ni-Al,...) et certains métaux purs (CO, Ti, Na).

Dans le mode de réalisation illustré sur les figures, le chauffage de l'entretoise tubulaire 34 en matériau à mémoire de forme jusqu'à la température de transformation de ce matériau est obtenu au moyen d'un dispositif de chauffage constitué, par exemple, par une résistance électrique 36 bobinée directement autour de l'entretoise 34. Des conducteurs électriques 38 permettent de relier cette résistance électrique 36 à une source de courant électrique (non représente) embarquée sur le véhicule, par l'intermédiaire d'un interrupteur (non représenté) ouvert lors du lancement.

Lorsqu'un ordre de fermeture de cet interrupteur est émis, l'entretoise 34 en matériau à mémoire de forme est chauffée jusqu'à une température supérieure à sa température de transformation structurale. La structure de ce matériau redevient donc austénitique, ce qui a pour effet de lui faire reprendre sa forme initiale qui, dans ce cas, correspond à une plus grande longueur de l'entretoise 34.

Comme l'illustre la figure 2, un dimensionnement adéquat des composants de l'assemblage a pour effet, lors de l'allongement de l'entretoise 34, de provoquer un allongement permanent de la partie 10c de diamètre réduit de l'arbre 10, par suite de la venue en appui de l'entretoise 34 sur les épaulements 10d et 22a. Dans ces conditions, la précharge appliquée initialement sur les bagues interieures des roulements par l'intermédiaire de l'entretoise 22 est relâchée et un jeu J2 apparaît entre l'entretoise 22 et les bagues intérieures 16 et 16' des roulements.

Dans le mode de réalisation illustré sur les figures 1 et 2, ce jeu J2 est supprimé en plaçant lors du montage au moins une rondelle élastique 40, ou tout moyen techniquement équivalent, entre la bague intérieure 16' et l'entretoise 22. Cette rondelle élastique 40 maintient, dans les conditions opérationnelles, une légère précharge axiale qui a simplement pour but de supprimer le jeu J2.

Pour faciliter l'allongement de la partie 10c de diamètre réduit de l'arbre 10, cette partie 10c est avantageusement usinée en 10e sur une partie de la longueur, pour en réduire encore la section, comme l'illustrent les figures.

Dans une variante de réalisation non représentée, le chauffage du matériau à mémoire de forme est obtenu sans utiliser l'énergie électrique du satellite, en orientant ce dernier après sa mise en orbite, de telle sorte que le matériau soit alors chauffé par l'énergie solaire.

Dans un montage inverse de celui qui vient d'être décrit, c'est-à-dire dans lequel un arbre tournant est monté dans un manchon fixe par l'intermédiaire d'un ou plusieurs roulements, une structure analogue est utilisée afin d'appliquer initialement une précharge axiale sur la bague extérieure des roulements.

Grâce au dispositif selon l'invention, on réalise par des moyens simples et peu encombrants un relâchement de la précharge appliquée initialement sur des mécanismes tels que des roulements ou des systèmes vis-écrou embarqués sur des véhicules spatiaux, dès que ces véhicules sont en mode opérationnel. Les risques de création de jeux dans ces mécanismes lors du lancement sont donc supprimés puisqu'une précontrainte sensiblement plus élevée qu'auparavant peut alors être appliquée. De plus, la suppression de la limitation de cette précontrainte permet de simplifier de façon appréciable la procédure d'application de la précharge, qui ne réclame plus qu'une précision de ± 100 %. La nécessité d'interposer une pièce rigide de gerbage lors du lancement et de casser cette pièce après le lancement au moyen d'une commande pyrotechnique, est également supprimée, ce qui élimine tous les inconvénients inhérents à ce dernier système. Enfin, la suppression de la précharge en mode opérationnel, ou l'application d'une précharge très faible, augmente de façon très sensible la fiabilité des mécanismes.

Par ailleurs, les avantages inhérents aux matériaux à mémoire de forme s'ajoutent à ces avantages. Ainsi, la fiabilité d'un mécanisme ainsi commandé est totale, son fonctionnement n'engendre ni choc, ni pollution, et son encombrement est très faible.

Bien entendu, l'invention n'est pas limitée au mode de réalisation qui vient d'être décrit à titre d'exemple, mais en couvre toutes les variantes. Comme on l'a déjà observé, son application n'est pas limitée aux roulements à billes. Dans le même esprit, la structure des moyens de précharge peut également être différente de celle qui a été décrite, de même que la forme de la pièce en matériau à mémoire de forme. Enfin, la rotation relative entre les deux parties du mécanisme peut être illimitée ou, au contraire, limitée à des angles inférieurs à 360°.

## Revendications

1. Dispositif de relâchement d'une précharge appliquée initialement par des moyens de précharge (24, 10b) entre des pièces en mouvement d'un mécanisme, ce dispositif comprenant un organe (34) en un matériau à mémoire de forme agencé de façon à agir sur les moyens de précharge (24, 10b) pour commander un relâchement de la précharge appliquée entre lesdites pièces, sous l'effet d'un changement de sa forme, lors du franchissement d'une température de changement de phase du matériau à mémoire de forme, caractérisé par le fait que le mécanisme est embarqué sur un véhicule spatial et actionné lorsque ce dernier est en mode opérationnel, et par le fait que l'organe (34) en matériau à mémoire de forme ne fait pas partie des moyens de précharge (24, 10b), de telle sorte que la précharge appliquée initialement entre les pièces n'est pas supportée par l'organe (34) en matériau à mémoire de forme.

2. Dispositif selon la revendication 1, caractérisé par le fait que, le mécanisme comprenant au moins un roulement (14, 14') comportant une bague fixe (16, 16') et une bague tournante (18, 18') entre lesquelles sont placés des organes roulants (20, 20'), les moyens de précharge (24, 10b) agissent sur la bague fixe par l'intermédiaire d'une première entretoise tubulaire (22), pour appliquer initialement sur cette bague fixe une précharge axiale.

3. Dispositif selon la revendication 2, caractérisé par le fait que l'organe (34) en matériau à mémoire de forme est une deuxième entretoise tubulaire disposée coaxialement à la première entretoise (22), le franchissement de ladite température de changement de phase ayant pour effet d'allonger la deuxième entretoise et de transférer ladite précharge de la bague fixe à la deuxième entretoise tubulaire.

4. Dispositif selon l'une quelconque des revendications précédentes, caractérisé par le fait que les moyens de précharge (24, 10b) agissent sur lesdites pièces par l'intermédiaire de moyens élastiques (40).

5. Dispositif selon la revendication 4, combinée avec l'une quelconque des revendications 2 et 3, caractérisé par le fait que les moyens élastiques (40) sont interposés entre la première entretoise tubulaire (22) et la bague fixe (16') du roulement.

6. Dispositif selon l'une quelconque des revendications 2, 3 et 5, caractérisé par le fait que la bague fixe étant une bague intérieure (16, 16') du roulement, montée sur un arbre fixe (10), les moyens de précharge comprennent un écrou (24) vissé sur une extrémité filetée (10b) de cet arbre traversant la première entretoise tubulaire (22).

7. Dispositif selon l'une quelconque des revendications précédentes, caractérisé par le fait qu'il comprend de plus des moyens de chauffage (36) disposés à proximité dudit organe (34) en un matériau à mémoire de forme.

8. Procédé de relâchement d'une précharge appliquée initialement entre des pièces en mouvement d'un mécanisme embarqué sur un véhicule spatial, lorsque ce dernier est en mode opérationnel, caractérisé par le fait qu'il consiste à commander un changement de forme d'un organe (34) en un matériau à mémoire de forme associé à ce mécanisme, de façon à obtenir un relâchement de la précharge appliquée entre les pièces, en faisant franchir audit organe une température de changement de phase du matériau à mémoire de forme.

9. Procédé selon la revendication 8, caractérise par le fait qu'on fait franchir audit organe (34) la température de changement de phase du matériau à mémoire de forme en chauffant cet organe à l'aide de moyens de chauffage (36) disposés à proximité de ce dernier.

10. Procédé selon la revendication 8, caractérisé par le fait qu'on fait franchir audit organe (34) la température de changement de phase du matériau à mémoire de forme en chauffant cet organe au moyen de l'énergie solaire.

## Claims

1. Apparatus for the release of a prestress or preload initially applied by prestressing or preloading means (24,10b) between the moving parts of a mechanism, said apparatus comprising a member (34) made from a shape memory material and acting on the prestress or preload means (24,10b) so as to control a release of the prestress or preload applied between said parts under the effect of a change to its shape, when clearing a phase change temperature of the shape memory material, characterized in that the mechanism is carried on a spacecraft and operated when the latter is in the operational mode and by the fact that the memory material member (34) does not form part of the prestressing means (24,10b), so that the preload initially applied between the parts is not supported by the memory material member (34).

2. Apparatus according to claim 1, characterized in that the mechanism comprises at least one bearing (14,14') having a fixed ring (16,16') and a rotary ring (18,18') between which are placed the rolling members (20,20'), the prestressing means (24,10b) acting on the fixed ring via a first tubular spacer (22), so as to initially apply an axial prestress to said fixed ring.

3. Apparatus according to claim 2, characterized in that the shape memory material member (34) is a second tubular spacer arranged coaxially to the first spacer (22), the clearing of the phase change temperature having the effect of elongating the second spacer and of transferring the prestress from the fixed ring to the second tubular spacer.

4. Apparatus according to any one of the preceding claims, characterized in that the prestressing means (24,10b) act on said parts via elastic means (40).

5. Apparatus according to claim 4, combined with either of the claims 2 and 3, characterized in that the elastic means (40) are interposed between the first tubular spacer (22) and the fixed ring (16b) of the bearing.

6. Apparatus according to any one of the claims 2,3 and 5, characterized in that the fixed ring is an inner ring (16,16') of the bearing mounted on a fixed spindle (10), the prestressing means incorporating a nut (24) screwed onto a threaded end (10b) of said spindle traversing the first tubular spacer (22).

7. Apparatus according to any one of the preceding claims, characterized in that it also comprises heating means (36) located in the vicinity of said shape memory material member (34).

8. Process for the release of a prestress initially applied between the moving parts of a mechanism carried on a space vehicle, when the latter is in the operational mode, characterized in that it comprises controlling a shape change of a shape memory material member (34) associated with said mechanism, so as to obtain a release of the prestress applied between the parts by making said member clear a phase change temperature of the shape memory material.

9. Process according to claim 8, characterized in that said member (34) is made to clear the phase change temperature of the shape memory material by heating said member with the aid of heating means (36) located in the vicinity thereof.

10. Process according to claim 8, characterized in that said member (34) is made to clear the phase change temperature of the shape memory material by heating the member by solar power.

## Patentansprüche

1. Vorrichtung zum Lösen einer Vorspannung, die anfangs durch eine Vorspannungseinrichtung (24, 10b) zwischen sich in Bewegung befindenden Teilen eines Mechanismus angelegt ist, wobei diese Vorrichtung ein Glied (34) aus einem Material mit Gedächtniseffekt umfaßt, das angeordnet ist, auf die Vorspannungseinrichtung (24, 10b) zu wirken, um eine Lösung der zwischen den genannten Teilen angelegten Vorspannung unter der Wirkung der Änderung seiner Form beim Überschreiten einer Phasenänderungstemperatur des Materials mit Gedächtniseffekt zu in Gang zu bringen, **dadurch gekennzeichnet**, daß der Mechanismus an Bord eines Raumfahrzeugs ist und betätigt wird, wenn sich letzteres in einem Betriebsmodus befindet, und daß das Glied (34) aus einem Material mit Gedächtniseffekt kein Teil der Vorspannungseinrichtung (24, 10b) derart ist, daß die anfangs zwischen die Teile angelegte Vorspannung nicht von dem Glied (34) aus einem Material mit Gedächtniseffekt getragen wird.

2. Vorrichtung gemäß Anspruch 1, **dadurch gekennzeichnet**, daß der Mechanismus wenigstens ein Lager (14, 14') umfaßt, das einen festen Ring (16, 16') und einen sich drehenden Ring (18, 18') aufweist, zwischen denen Wälzglieder (20, 20') angeordnet sind, wobei die Vorspannungseinrichtung (24, 10b) auf den festen Ring mittels eines ersten, rohrförmigen Abstandsstücks (22) wirkt, um anfangs an diesem festen Ringe eine axiale Vorspannung anzulegen.

3. Vorrichtung gemäß Anspruch 2, **dadurch gekennzeichnet**, daß das Glied (34) aus einem Material mit Gedächtniseffekt ein zweites, rohrförmiges Abstandsstück ist, das koaxial zu dem ersten Abstandsstück (22) angeordnet ist, wobei die Überschreitung der genannten Phasenänderungstemperatur die Wirkung hat, das zweite Abstandsstück auszudehnen und die genannte Vorspannung des festen Rings auf das zweite, rohrförmige Abstandsstück zu übertragen.

4. Vorrichtung gemäß irgendeinem der vorhergehenden Ansprüche, **dadurch gekennzeichnet**, daß die Vorspannungseinrichtung (24, 10b) auf die genannten Teile mittels elastischer Einrichtung (40) wirkt.

5. Vorrichtung gemäß Anspruch 4 in Kombination mit irgendeinem der Ansprüche 2 und 3, **dadurch gekennzeichnet**, daß die elastischen Einrichtungen (40) zwischen dem ersten, rohrförmigen Abstandsstück (22) und dem festen Ring (16') des Lagers eingefügt sind.

6. Vorrichtung gemäß irgendeinem der Ansprüche 2, 3 und 5, **dadurch gekennzeichnet**, daß der feste Ring ein innerer Ring (16, 16') des Lagers ist, der auf einer festen Welle (10) angebracht ist, die Vorspannungseinrichtung eine Mutter (24) umfaßt, die auf ein Gewindeende (10b) dieser Welle geschraubt ist, die das erste, rohrförmige Abstandsstück (22) durchquert.

7. Vorrichtung gemäß irgendeinem der vorhergehenden Ansprüche, **dadurch gekennzeichnet**, daß sie ferner eine Heizeinrichtung (36) umfaßt, die nahe dem genannten Glied (34) aus einem Material mit Gedächtniseffekt angeordnet ist.

8. Verfahren zum Lösen einer anfangs zwischen zwei sich in Bewegung befindenden Teilen eines sich an Bord eines Raumfahrzeugs befindenden Mechanismus angelegten Spannung, wenn sich letzteres im getriebszustand befindet, **dadurch gekennzeichnet**, daß es darin besteht, eine Formänderung eines Glieds (34) aus einem Material mit Gedächtniseffekt, das mit diesem Mechanismus verbunden ist, derart herbeizuführen, daß ein Lösen der zwischen den zwei Teilen angelegten Vorspannung erhalten wird, indem man das genannte Glied eine Phasenänderungstemperatur des Materials mit Gedächtniseffekt überschreiten läßt.

9. Verfahren gemäß Anspruch 8, **dadurch gekennzeichnet**, daß man das genannte Glied (34) die Änderungstemperatur der Phase des Materials mit Gedächtniseffekt überschreiten läßt, indem dieses Glied mit Hilfe von Heizeinrichtungen (36) erwärmt wird, die nahe letzterem angeordnet sind.

10. Verfahren gemäß Anspruch 8, **dadurch gekennzeichnet**, daß man das genannte Glied (34) die Änderungstemperatur der Phase des Materials mit Gedächtniseffekt überschreiten läßt, indem dieses Glied mittels Sonnenenergie erwärmt wird.
